# EUROPEAN PATENT APPLICATION

(11) **EP 4 725 449 A1**
(43) Date of publication of application: **15.04.2026**
(21) Application number: 25207881.1
(22) Date of filing: 10.10.2025
(51) Int. Cl.: A61C 8/00

(54) **DENTAL IMPLANT WITH CONNECTOR FOR PROSTHESES**

(30) Priority: 11.10.2024 IT 202400022722
(71) Applicant: Sweden & Martina SpA, 35020 Due Carrare (PD) (IT)
(72) Inventor: MARTINA, Alberto, 35020 Due Carrare (IT)
(74) Representative: Rocchetto, Elena

(57) **Abstract**

The invention is a dental implant (100, 101, 102) comprising a first threaded endosseous portion (200) having a central axis (X) and joined, so as to form a single piece, to a second extra-mucosal portion (300), which in turn is provided with a truncated cone-shaped portion (340) having an internally threaded axial hole (342) in which a fixing screw (510) for placing a prosthesis (500) is screwed. The implant also comprises a connector (400) comprising a first threaded portion (410) suited to be screwed into said hole (342) of said extra-mucosal portion (300) and a projecting portion (420). Said connector (400) is axially perforated and the inside of its axial hole (430) is completely or partially threaded so as to allow a fixing screw (610) for placing a prosthesis (600) to be screwed therein. The combination of said projecting portion (420) of the connector (400) and said truncated cone-shaped portion (340) defines a shape or surface suitable for coupling with said prosthesis (600).

## Description

The present patent concerns dental implants, and more specifically it concerns a new dental implant and a new connector for said dental implant.

Dental implants are known which comprise a first threaded endosseous portion, intended to be implanted in the bone of the upper or lower jaw, and a second portion or post that is made integral with said endosseous portion and is intended to serve as a support for placing the crown.

Implants are known, in which said post and said endosseous portion are made in separate parts, and wherein said post is fixed to the endosseous portion after the latter has been implanted.

The so-called one-piece implants are also known, in which the post and the endosseous portion are made in a single piece. In this case, the implant is made up of a first threaded endosseous portion and a second extra-mucosal portion configured for placing the crown or dental prosthesis by means of a fixing screw.

The head of the extra-mucosal portion is provided with a threaded hole for screwing in the fixing screw used to place the prosthesis.

The patent documents 102018000002265 and EP3754988 describe a one-piece implant for guided dental implantology, in combination with a surgical template that can be positioned on the alveolar bone, and comprising a series of shaped openings suited to guide the surgeon when they need to drill holes in the patient's alveolar bone, so that they correctly place the implants.

Once the holes have been drilled in the bone, the implants are placed. Said implants are specially configured, in such a way that the side wall of the implant has no undercut and the implant placement through guided surgery is thus simplified. Said implants have limitations in their application due to the size of the internal threaded hole, which is normally maximized in order to reduce the risk of excessively thin screws breaking inside the hole, which would require the replacement of the entire implant.

For example, in the above-mentioned patent, the internal threaded hole is sized to allow screws with a diameter of 1,8 mm to be screwed therein.

Consequently, the implant can be used only in combination with specifically dedicated prosthetic components, which severely limits the possible applications and the use of standard components which, for example, normally and universally require the use of 1,4 mm screws.

The patent document US2020/0078144 A1 describes an implant provided with an internally threaded hole for screwing in a post, which in turn is provided with a threaded portion suited to be screwed into said hole in the implant. Said post is also configured for the placement of a temporary crown. The document shows how the post can be provided with an additional hole at the top, which however has the same diameter as the hole in the implant, so that, consequently, said implant does not solve the above-mentioned issues.

The patent document US 2023/140136 A1 describes an implant provided with an axial hole in which a fixing screw, used to secure a connector to the implant itself, can be screwed. The configuration of the connector is such that the latter can be coupled with a dental crown. This type of device also fails to solve the above-mentioned issues regarding screw size limitations.

The patent document US 9289275 B2 describes an implant consisting of a first endosseous part and a second additional endosseous part that is inserted at an angle into a through hole made in said first endosseous part. A post is placed in said first endosseous part by means of a fixing screw. Said post also has an inclined, non-axial through hole which corresponds to the one present in said first endosseous part and is suitable for the insertion of said second endosseous part. Said second endosseous part serves to anchor the implant more firmly. Said device does not solve the above-mentioned issues, either.

The subject of the present invention is a new dental implant consisting of a single piece, whose configuration has been studied in order to improve and speed up the healing process of the mucosa.

Another essential object of the invention is to provide a new implant that can be made compatible with screws and prostheses of different sizes, thanks to the use of the new connector, which serves the function of an adapter.

Essentially, the combination of the connector, which has a specially shaped head, with the extra-mucosal portion of the implant creates a shape that is suitable for coupling with a prosthesis. More specifically, as described and claimed below, a part of the connector and a substantially truncated cone-shaped portion of the implant, once correctly joined, define a surface that is suitable for coupling with a corresponding coupling surface of a prosthesis.

This makes it also possible to place standard prostheses on implants provided with non-standard connections, or vice versa.

These and other direct and complementary objects are achieved by the new dental implant and the new connector for said dental implant.

The characteristics of the new dental implant and the connector are better clarified in the following description, making reference to the drawings, which are attached by way of non-limiting example.

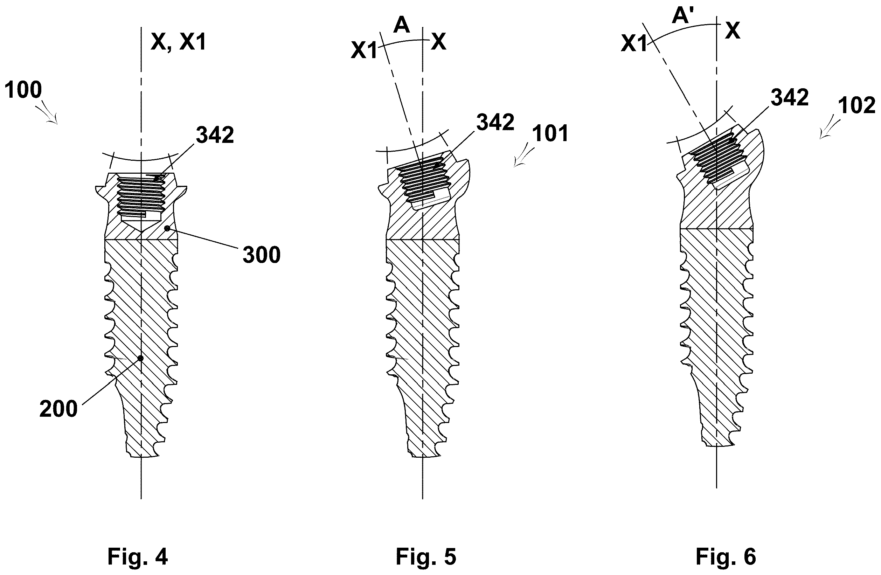

Figures 1, 2 and 3 show side views of three possible embodiments of the new implant (100, 101, 102), while Figures 4, 5 and 6 show their respective axial cross sections.

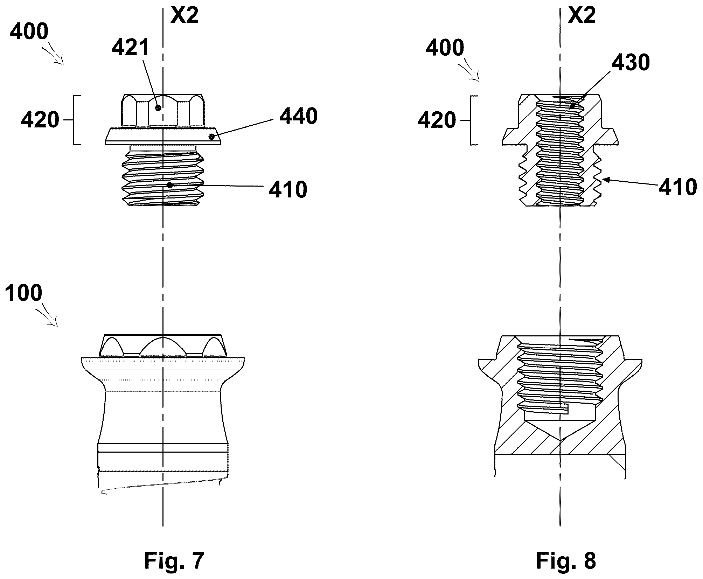

Figures 7 and 8 respectively show a side view and an axial sectional view of a connector (400) for the dental implants (100, 101, 102) of the previous figures.

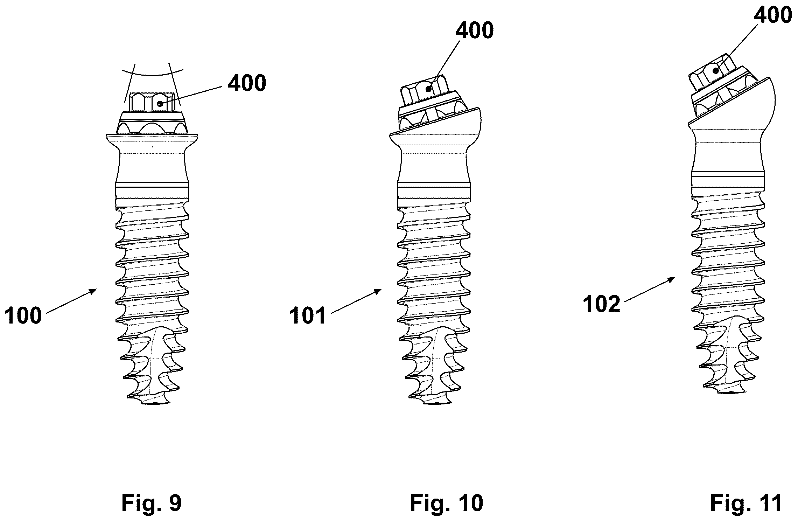

Figures 9, 10 and 11 show side views of the implants (100, 101, 102) of the previous figures, with the connector (400) installed.
Figure 12 shows a sectional view illustrating how a prosthesis (500) can be directly placed on the implant (102) by means of a fixing screw (510), while Figure 13 shows a sectional view illustrating how a second type of prosthesis (600) can be placed on the same implant (102) by means of the connector (400) and a smaller screw (610).

Thus, thanks to the convenient size and configuration of the connector (400), it is therefore also possible to use gold standard components such as prostheses (600) with 1,4 mm fixing screws (610), which are universally used for these applications. In this case, the risk of breaking the fixing screw is of relative importance, since the connector (400) can be simply and quickly removed, if necessary, with no need to remove the entire implant (102).

The new implant (100) comprises a first threaded endosseous portion (200) joined to a second extra-mucosal portion (300).

Said first threaded endosseous portion (200) has a longitudinal central axis X and extends from a first end (210) of the implant (200) to said extra-mucosal portion (300).

Said extra-mucosal portion (300) in turn comprises a first conical section (310) which is not threaded and is connected to said first endosseous portion (200), with taper narrowing from the endosseous portion (200) towards a second section (320) having a convex and preferably rounded lateral surface, which broadens towards a substantially flat end defining a platform (330).

Said convex section (320) is connected to said conical section (310) by means of a concave annular surface (321), which also is preferably rounded.

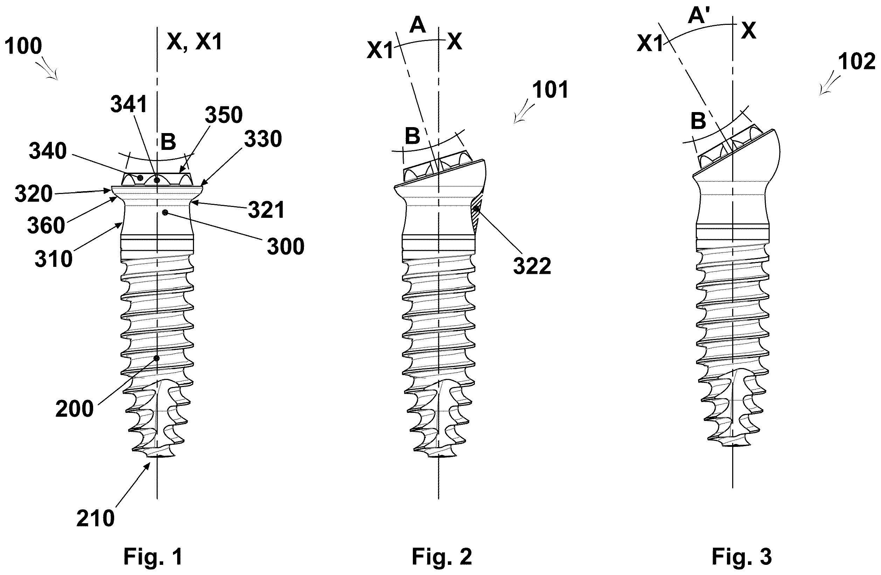

Said conical section (310), said concave annular surface (321) and said convex section (320) thus define an undercut, that is, an empty volume (322) which is useful for the healing process as it allows for soft tissue growth. Said empty volume (322), for example, is shown in Figure 2, where it is schematically hatched.

Furthermore, according to the invention, the surface of said conical section (310), of said concave annular surface (321) and of said convex section (320) is completely or partially machined in such a way as to optimize interaction with soft tissue, thereby improving and accelerating healing processes.

A truncated cone-shaped portion (340), whose truncated end has a substantially flat surface (350), extends upwards from said platform (330).

Said truncated cone-shaped portion (340) is provided with an internally threaded axial hole (342) whose central axis (X1) is orthogonal to said platform (330).

Said hole (342) is configured in such a way that a screw (510) for placing a prosthesis (500) or a connector (400) as described below can be screwed therein, and therefore its axis (X1) defines the direction of insertion of the screw (510) and the connector (400).

The outside of said truncated cone-shaped portion (340) is configured with shaped parts (341) suited to be coupled with screwing tools.

In the first solution shown in Figure 1, said implant (100) has an overall straight shape, that is, said axis (X) of the endosseous portion (200) coincides with said axis (X1) of the truncated cone-shaped portion (340), so that said endosseous portion (2) and said truncated cone-shaped portion (340) are coaxial, while said platform (330) is consequently orthogonal to said axis (X) of the endosseous portion (200).

In this configuration, said second convex section (320) of the extra-mucosal portion (300) is axially symmetrical and, together with said first conical section (310), defines an axially symmetrical undercut (360) that serves to promote the growth and therefore the healing of soft tissue, since an empty volume (322) (shown in Figure 2), in which tissue can grow, is created.

In the second solution shown in Figure 2, said implant (101) has a non-rectilinear configuration, in which the axis (X1) of said truncated cone-shaped portion (340) is inclined with respect to said axis (X) of the endosseous portion (200) and, consequently, said platform (330) is not orthogonal to said axis (X) of the endosseous portion (200). In said second solution, the angle (A) between said axes (X, X1), for example, is equal to 17°.

In this configuration, said convex section (320) is not axially symmetrical, in fact it is longer on one side and shorter on the opposite side, forming a substantially spherical surface portion.

In the third solution shown in Figure 3, said implant (102) has a non-rectilinear configuration similar to that shown in Figure 2, in which, instead, the angle (A') between said axes (X, X1) is wider, for example equal to 30°.

Even in this configuration, said convex section (320) is not axially symmetrical, in fact it is longer on one side and shorter on the opposite side, forming a substantially spherical surface portion.

Said truncated cone-shaped portion (340) has an opening angle (B) that is preferably equal to 30° or in any case such that said angle (A, A') between the axis (X1) of the truncated cone-shaped portion (340) and the axis (X) of the endosseous portion (200) is always greater than half of said opening angle (B) of the truncated cone-shaped portion (340).

It has been found that this configuration is preferable to achieve an implant that can support the prosthesis (500, 600) while at the same time simplifying insertion and removal operations.

Said hole (342) made in said truncated cone-shaped portion (340) is internally threaded and configured in such a way that a fixing screw (510) for placing a prosthesis (500) can be screwed therein.

Said hole (342) is also suitable for screwing in a connector (400) that in turn comprises a first threaded portion (410), designed to be screwed into said hole (342) in the truncated cone-shaped portion (340) of the implant (100), and a projecting portion (420), that is, a portion that protrudes from the implant.

Said projecting portion (420) may in turn preferably comprise a protruding annular part (440) designed to rest on said surface (350) of the truncated end of the truncated cone-shaped portion (340) and a head (421) shaped in such a way that the connector (400) can be screwed into said endosseous portion (200).

Said connector (400) is provided with an axial hole and the inside of its axial hole (430) is completely or partially threaded in such a way that a screw (610) for pla a prosthesis (600) can be screwed therein.

When the connector (400) is correctly mounted on said implant (100), the central axis (X2) of the connector (400) is parallel to and coincident with the axis (X1) of the truncated cone-shaped portion (340) of the implant (100).

The diameter of said axial hole (430) of said connector (400) is different from the diameter of said hole (342) of the truncated cone-shaped portion (340) of the implant (100), for example smaller, and therefore the connector (400) can be conveniently used with smaller screws and thus smaller prostheses.

In the solution shown in the figures, in particular, the diameter of said first threaded portion (410) of said connector (400) preferably exceeds 2,0 mm, for example is equal to 2,5 mm, corresponding to that of said internal threaded hole (342) of said implant (100). Said first threaded portion (410) is therefore particularly resistant, and the risk that the connector (400)-implant (100) assembly may undesirably break or become loose is lower.

Said internal threaded hole (430) of the connector (400) may instead have a diameter of 1,4 mm, meaning such a diameter as to allow for the screwing of gold standard components, whose fixing screws (610) typically have this diameter.

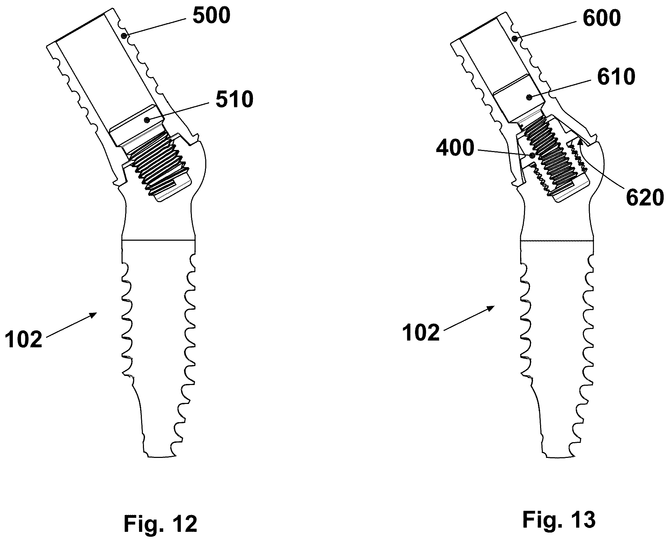

Furthermore, according to the invention, said projecting portion (420) of the connector (400) has a shape which, together with said truncated cone-shaped portion (340), forms a head or surface suitable for coupling with the corresponding coupling seat (620) of said second "standard" prosthesis (600), as shown in Figure 13.

Therefore, with reference to the above description and the attached drawings, the following claims are made.

## Claims

1. Dental implant (100, 101, 102) comprising a first threaded endosseous portion (200) having a central axis (X) and joined, so as to form a single piece, to a second extra-mucosal portion (300), in turn provided with a truncated cone-shaped portion (340), or a tapered portion in general, having an internally threaded axial hole (342) in which a fixing screw (510) for fixing a prosthesis (500) is screwed, **characterized in that** it also comprises a connector (400) in turn comprising a first threaded portion (410) suited to be screwed into said hole (342) of said extra-mucosal portion (300) and a projecting portion (420) having a shaped head (421) for screwing said connector (400), and wherein said connector (400) is axially perforated and the inside of its axial hole (430) is completely or partially threaded so as to allow a fixing screw (610) for placing a prosthesis (600) to be screwed therein, and wherein the diameter of said hole (342) of said extra-mucosal portion (300) is different from the diameter of said axial hole (430) of said connector (400), and wherein the combination of said projecting portion (420) of the connector (400) and of said truncated-cone shaped portion (340) of the implant defines a coupling shape or surface suitable for coupling with said prosthesis (600).

2. Dental implant (100, 101, 102) according to claim 1, **characterized in that** the diameter of the thread of said axial hole (430) of said connector (400) is different from the diameter of the thread of said hole (342) of the truncated cone-shaped portion (340) of the implant (100).

3. Dental implant (100, 101, 102) according to claim 1, **characterized in that** the diameter of the thread of said axial hole (430) of said connector (400) is smaller than the diameter of the thread of said hole (342) of the truncated cone-shaped portion (340) of the implant (100).

4. Dental implant (100, 101, 102) according to claim 1, **characterized in that** said axial hole (430) of said connector (400) has a diameter of 1,4 mm.

5. Dental implant (100, 101, 102) according to claim 1, **characterized in that** said first threaded portion (410) of the connector (400) and said hole (342) of the truncated cone-shaped portion (340) have a diameter of more than 2,0 mm.

6. Dental implant (100, 101, 102) according to claim 1, **characterized in that** said extra-mucosal portion (300) in turn comprises:
- a first conical section (310) which is not threaded and is connected to said first endosseous portion (200), whose tapered section narrows from the endosseous portion (200) towards a second section (320);
- said second section, or convex section (320), having a convex and preferably rounded lateral surface which broadens towards a substantially flat end defining a platform (330);
- a concave annular surface (321), preferably rounded, connecting said conical section (310) and said convex section (320);
- a truncated cone-shaped portion (340) extending from said platform (330) and provided with said internally threaded axial hole (342) whose central axis (X1) is orthogonal to said platform (330),
and wherein said conical section (310), said concave annular surface (321) and said convex section (320) define an undercut (360) that creates an empty space (322) for soft tissue cell growth.

7. Dental implant (100) according to claim 5, **characterized in that** said axis (X) of the endosseous portion (200) coincides with said axis (X1) of said truncated cone-shaped portion (340), and wherein said second convex section (320) of the extra-mucosal portion (300) is axially symmetrical and together with said first conical section (310) defines an axially symmetrical undercut (360).

8. Dental implant (101, 102) according to claim 5, **characterized in that** said axis (X1) of said truncated cone-shaped portion (340) is inclined with respect to said axis (X) of the endosseous portion (200), thus defining a first angle (A, A'), and wherein said convex section (320) is not axially symmetrical but is longer on one side and shorter on the opposite side, thus defining a substantially spherical surface portion.

9. Dental implant (101) according to claim 7, **characterized in that** the angle (A) between said axis (X) of the endosseous portion (200) and said axis (X1) of the truncated cone-shaped portion (340) is an angle of 17°.

10. Dental implant (102) according to claim 7, **characterized in that** the angle (A') between said axis (X) of the endosseous portion (200) and said axis (X1) of the truncated cone-shaped portion (340) is an angle of 30°.

11. Dental implant (100, 101, 102) according to claim 7, **characterized in that** said truncated cone-shaped portion (340) preferably has an opening angle (B) of 30°, or in any case such that said angle (A, A') between the axis (X1) of the truncated cone-shaped portion (340) and the axis (X) of the endosseous portion (200) is always greater than half of said opening angle (B) of the truncated cone-shaped portion (340).

12. Dental implant (100) according to the preceding claims, **characterized in that** said connector (400) comprises a projecting annular portion (440) which is intended to rest on the surface (350) of the truncated part of said extra-mucosal portion (300) and which together with said shaped head (421) and said truncated cone-shaped portion (340) defines said shape or surface suitable for coupling with a prosthesis (600) of the standard type.

13. Dental implant (100, 101, 102) according to the preceding claims, **characterized in that**, with the connector (400) correctly installed, the central axis (X2) of said connector (400) coincides with the axis (X1) of said truncated cone-shaped portion (340) of the implant.
